# EUROPEAN PATENT SPECIFICATION

(11) **EP 0 698 684 B1**
(45) Date of publication and mention of the grant of the patent: **28.11.2001**
(21) Application number: 95111693.8
(22) Date of filing: 25.07.1995
(51) Int. Cl.: D21G 1/02, F16C 13/00

(54) **Extended-nip press**
Langspaltpresse
Presse à pince allongée

(30) Priority: 04.08.1994 FI 943620
(43) Date of publication of application: 28.02.1996
(73) Proprietor: Metso Paper, Inc., 00130 Helsinki (FI)
(72) Inventor: Ehrola, Juha, SF-49800 Vaajakoski (FI); Kivioja, Pekka, SF-40950 Muurame (FI); Holopainen, Kari, SF-40200 Jyväskylä (FI)
(74) Representative: Tiedtke, Harro, Dipl.-Ing.

(56) References cited:
- EP-A- 0 389 458
- WO-A-92/13787
- WO-A-95/09309
- DE-A- 2 522 657
- DE-A- 4 217 737

## Description

The invention concerns an extended-nip press according to the precharacterising part of claim 1.

From a variable-crown roll loaded by means of shoes, and in particular from the mantle of such a roll, different properties are required in the direction of the circumference of the mantle and in the direction of the roll axle. Variable-crown rolls are used commonly as nip rolls, and in such a case the shape of the mantle must remain unchanged even at high nip loads. However, in cases in which the nip pressure is supposed to be profiled in the direction of the roll axle, the rigidity of the roll mantle in the axial direction must be low. Conventional variable-crown rolls are thick-mantle steel rolls, in which case the profiling of the nip pressures requires very high forces applied to the roll mantle. This is why, in certain cases, it would be advantageous if the roll mantle could be made thinner. The technique of manufacture that is in use currently, however, restricts a reduction of the thickness of the steel mantles. A second problem involved in the prior-art variable-crown rolls is the high weight of the thick roll mantle and the drawbacks resulting from this weight. It is a significant drawback arising from the weight of the roll mantle that the properties of oscillation of the roll mantle are poor.

According to document DE-A-25 22 657 there is disclosed a variable-crown roll which comprises a stationary roll axle around which a tubular roll mantle is fitted so as to revolve. The tubular roll mantle is made of an elastic rubber-like material in which a helical insert made of metal is included, so that the rigidity in a circumferential direction of the roll mantle is high, whereas the rigidity in an axial direction of the roll axle is low.

According to the further document WO-A-92/13787 there is disclosed another variable-crown roll which comprises a tubular roll mantle. The roll comprises a stationary roll axle around which a tubular roll mantle is fitted so as to revolve. The roll mantle can be made from a fibre-reinforced plastic so that the weight of the roll mantle is reduced.

From the document EP-A-0 389 458 there is known a generic extended-nip press according to the preamble of claim 1. According to EP-A-0 389 458, the extended-nip press comprises a variable-crown roll as a back-up roll, said roll being a smooth-faced, preferably metal-faced roll, which permits heating of the roll face.

It is the object of the present invention to provide an improved extended-nip press in which the nip pressures can be profiled in the axial direction in the desired way.

The above object is achieved by the combination of the features set forth in claim 1.

Preferable embodiments of the invention are defined in the subclaims.

By means of the invention, compared with the prior art, a number of advantages are obtained, of which, for example, the following should be stated herein. First, the back-up roll of the extended-nip press in accordance with the present invention excellently meets the requirement that the nip pressures can be profiled in the axial direction in the desired way, at the same time as the shape of the roll mantle in the direction of the circumference remains unchanged even with high loads. This property has been obtained by means of a suitable choice of the material, because, when the roll mantle is made of a fibre-reinforced composite material, the desired properties are obtained for the roll mantle by means of alignment of the reinforcement fibres and by means of the choice of the reinforcement materials. Compared with the prior art, it is a highly remarkable further advantage of the invention that the properties of oscillation of the roll are significantly better than in the prior art, because, in the present invention, the weight of the roll mantle is just a fraction of the weight of a conventional steel mantle. It is a further advantage of the roll mantle of the back-up roll of the extended-nip press in accordance with the present invention that the inner face of the mantle does not have to be machined, because the shape of the inner face of the roll mantle, i.e. its cylindrical and circular shape and the quality of the surface of the inner face, are automatically good in order that the mantle could be detached from its mould at all. The further advantages and characteristic features of the invention will come out from the following detailed description of the invention.

In the following, the invention will be described by way of example with reference to the figures in the accompanying drawing.

Figure 1 is a schematic vertical axial sectional view of a back-up roll of an extended-nip press in accordance with the invention.

Figure 2 is a schematic sectional view of the back-up roll taken along the line II-II in Fig. 1.

Figure 3 is a schematic sectional view of an extended-nip press in accordance with the invention.

Figure 4 is a schematic sectional view of an extended-nip press in accordance with the invention, which press is provided with two press felts.

Figure 5 shows a preferred embodiment of the hydraulic diagram of an extended-nip press in accordance with the invention.

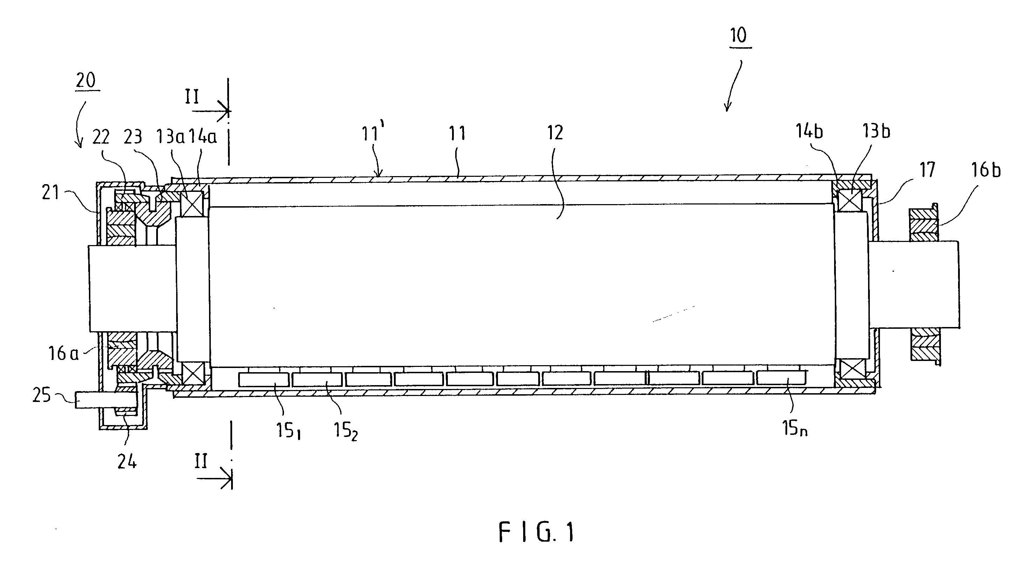

In the illustrations in the drawing, the back-up roll of an extended-nip press in accordance with the invention is denoted generally with the reference numeral 10. As is shown in Fig. 1, the roll 10 comprises a tubular roll mantle 11, which is mounted revolving on the roll axle 12 by means of end bearings 13a,13b. Between the end bearings 13a,13b of the roll and the roll mantle 11, support rings 14a,14b have been fitted, by whose means the roll mantle 11 is supported on the end bearings 13a,13b. On the roll axle 12, loading shoes 15₁...15ₙ have been fitted, which are loaded by means of a hydraulic pressure medium and which are supported against the inner face of the roll mantle 11. The roll axle 12 is mounted by means of articulated bearings 16a,16b on the frame of the paper machine or on an equivalent frame member.

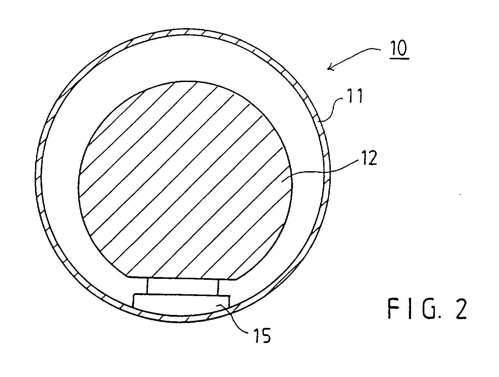

As is illustrated in Fig. 1 and also in Fig. 2, the thickness of the roll mantle 11 is very little, compared with conventional variable-crown rolls with steel mantles. The roll mantle 11 is made of a fibre-reinforced composite material, for example, by means of a normal manufacturing technique by winding_onto a mandrel. In the material, preferably a continuous fibre is employed, which is aligned in the desired way to provide the desired properties. By means of alignment of the reinforcement fibres and choice of the reinforcement materials, the desired properties are provided in the different directions. As was already stated above, the shape of the roll mantle must remain unchanged in the direction of the circumference even at high loads, whereas the rigidity of the mantle in the axial direction should be low in order that the nip pressures could be profiled in the axial direction. By means of an orientation of the fibres in the direction of the circumference of the roll mantle in the composite material of the roll mantle 11, the roll mantle 11 can be made rigid in the direction of the circumference, in which case, correspondingly, the rigidity in the direction of the roll axle 10 remains lower. However, in practice the fibres cannot be aligned fully in the direction of the circumference, but, in view of successful manufacture of the roll mantle, the alignments of the reinforcement fibres must be made at an angle of ± 5...25° in relation to the direction of the circumference. As the composite material of the roll mantle 11, preferably carbon-fibre reinforced epoxy is used, even though other, alternative materials are also possible. As examples of such other alternative materials should be mentioned, for example, that, as the matrix of the composite material, it is possible to use, e.g., some metal, such as aluminum.

The outer face 11' of the roll mantle can be coated in a way similar to steel faces. Thus, the outer face 11' of the roll mantle can be provided, for example, with an elastomer or rubber coating when the roll is used in the way of an ordinary nip roll, also when a felt runs between the roll mantle and the paper web. In particular when the roll 10 is used as a back-up roll of an extended-nip press in a single-felt extended-nip press in which the paper web enters into direct contact with the roll, the outer face 11' of the roll mantle must be provided with a coating that adheres to the paper web, on the one hand, and is well separated from the paper web, on the other hand. In such a case, it is favourably possible to use a ceramic coating as the material of the coating.

The roll 10 as shown in Fig. 1 is provided with a drive gear 20. As such, the roll is suitable for use as a back-up roll in an extended-nip press. Since the material of the roll mantle 11 differs from conventional steel rolls in respect of its properties of strength and rigidity, the drive gear cannot be attached directly to the roll mantle 11 itself. Thus, the driven cogwheel 22 of the drive gear 20 is attached to the support ring 14a of the end bearing 13a of the roll by means of a support 23. In the other respects, the drive gear 20 involves conventional technology so that the driving cogwheel 24 mounted on the drive shaft 25 is in gear engagement with the driven cogwheel 22. The housing of the drive gear is denoted with the reference numeral 21 in Fig. 1. The opposite end of the roll 10 is provided with a roll end 17 attached to the support ring 14b of the end bearing 13b.

Fig. 2 is a vertical sectional view of the back-up roll of an extended-nip press in accordance with the invention, and in this figure, similarly to Fig. 1, the roll is denoted with the reference numeral 10, the roll mantle with the reference numeral 11, the roll axle with the reference numeral 12, and the loading shoes with the reference numeral 15.

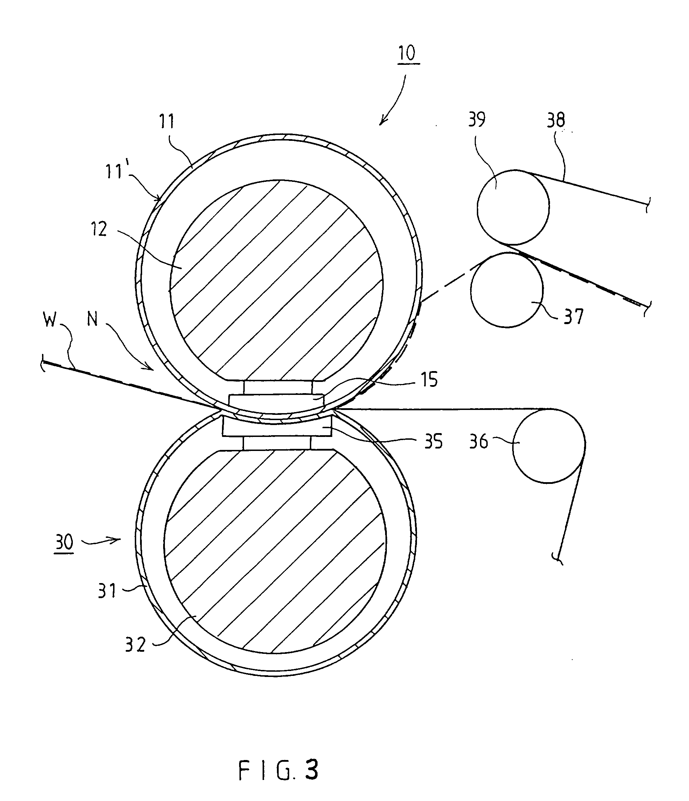

Fig. 3 illustrates the invention in which the roll 10 is used as the back-up roll in an extended-nip press. In Fig. 3, the extended-nip press roll is denoted with the reference numeral 30. In the normal way, the extended-nip press roll 30 comprises a glide-belt mantle 31 passed around a stationary axle 32 and loading members 35 or equivalent loading shoes, which are fitted on the axle 32 and which are loaded by means of a hydraulic pressure medium against the inner face of the glide-belt mantle 31 towards the nip N. The loading members or the equivalent loading shoes 35 in the extended-nip press roll 30 are shaped so that their outer faces are concave outwards in the way shown in Fig. 3, so that, owing to this, an extended nip N is provided as the glide-belt mantle 31 follows along the concave outer faces of the loading shoes 35. The extended-nip press shown in Fig. 3 is a single-felt press, in which the paper web W is passed into the nip N on support of the press felt F. After the nip N, the press felt F is passed, when guided by the alignment rolls 36, as a loop around the extended-nip press roll 30. Since the extended-nip press shown in Fig. 3 is a single-felt press, in which the paper web W enters into direct contact with the roll mantle 11 of the roll 10, the outer face 11' of the roll mantle is preferably provided with a coating which adheres to the paper web W well, so that the paper web W can be made to run, after the nip N, over a certain distance along the outer face 11' of the roll mantle. Further, the coating must be such that the paper web W is separated readily from the outer face 11' of the roll mantle at the desired point, so that the paper web W can be separated from the outer face 11' of the roll mantle readily by means of a guide roll 37 to be passed onto the drying wire 38. In Fig. 3, the reversing roll of the drying wire 38 is denoted with the reference numeral 39. Thus, in the outer face 11' of the roll mantle, it is preferable to use, for example, a ceramic coating.

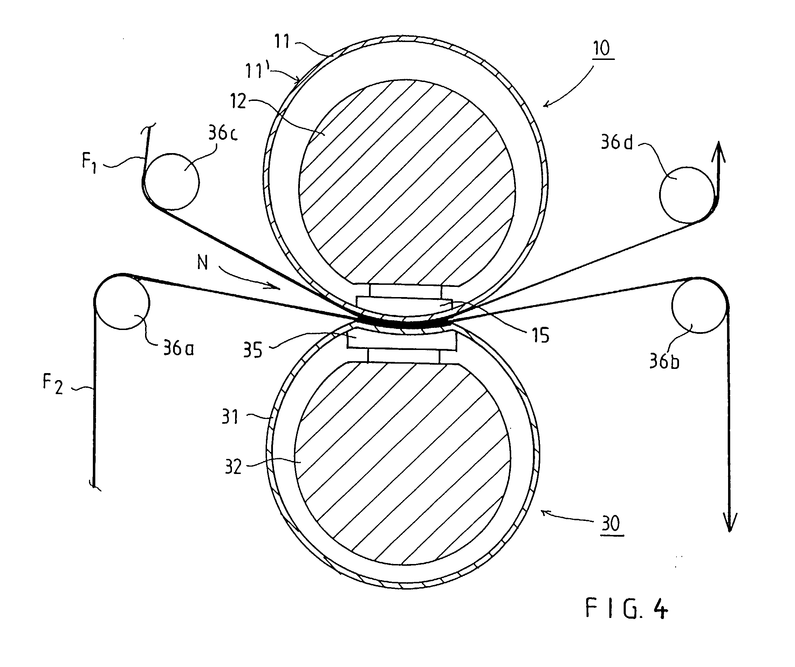

Fig. 4 shows an embodiment in which the roll 10 is used in a twin-felt extended-nip press as the back-up roll of the extended-nip press roll 30. For the roll 10 and for the extended-nip press roll 30, the same reference numerals are used as in Fig. 3. Thus, the extended-nip press shown in Fig. 4 is a twin-felt press, in which the press felts F₁ and F₂ have been passed through the extended nip N while guided by the alignment rolls 36a,36b,36c and 36d. Thus, the paper web (not shown) that is passed into the nip N runs through the nip N between the press felts F₁ and F₂. Also in such a case, as was already described earlier, it is preferable that the outer face 11' of the roll mantle of the roll 10 is provided with an elastomer coating or an equivalent rubber coating.

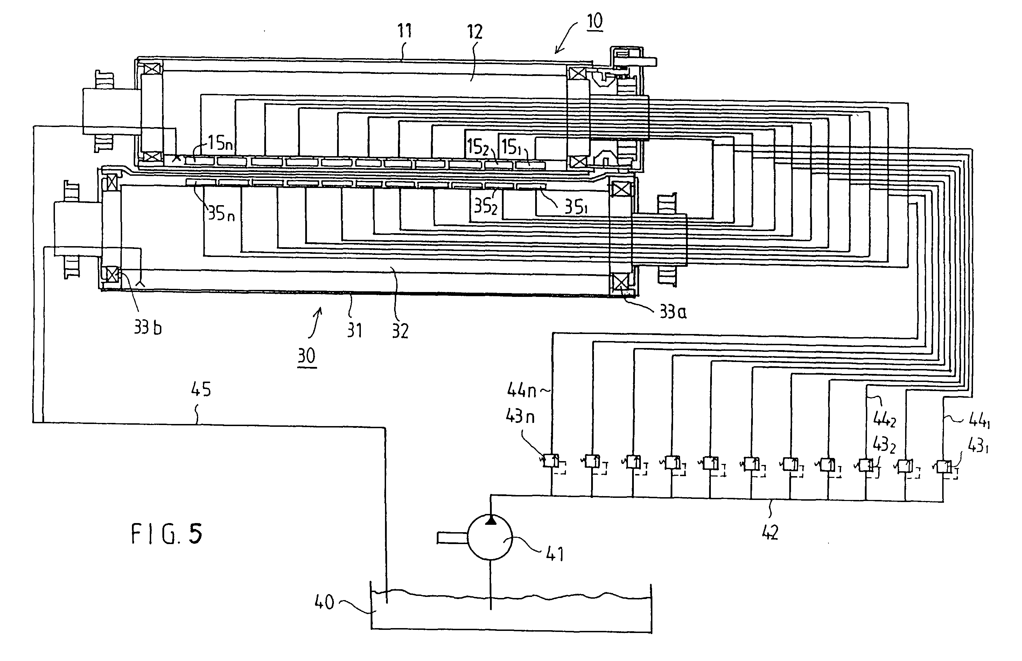

Finally, Fig. 5 shows a preferred embodiment of the hydraulic diagram of an extended-nip press in accordance with the invention. In Fig. 5, the roll that operates as the back-up roll in the extended-nip press is denoted with the reference numeral 10, and, as was described earlier, said roll 10 comprises a stationary roll axle 12, onto which a roll mantle 11 has been arranged revolving, which roll mantle 11 is loaded towards the nip by means of loading shoes 15₁...15ₙ supported on the roll axle 12. Similarly, the extended-nip press roll is denoted with the reference numeral 30. The extended-nip press roll 30 comprises a stationary roll axle 32, on which a glide-belt mantle 31 is fitted, which is mounted on the axle 32 by means of end bearings 33a,33b. As was described earlier, the extended-nip press roll 30 is provided with loading members 35₁...35ₙ or equivalent loading shoes, which are supported on the axle 32 and by whose means the glide-belt mantle 31 is loaded towards the nip. Both the loading shoes 15₁...15ₙ in the roll 10 and the loading members 35₁...35ₙ in the extended-nip press roll 30 are loaded hydraulically.

For the purpose of loading the nip, the extended-nip press is provided with a hydraulic system which comprises a tank 40 for the hydraulic medium, from which the hydraulic pump 41 takes the hydraulic pressure medium and feeds said medium to the loading shoes 15₁...15ₙ of the roll 10 that operates as the back-up roll and to the loading members 35₁...35ₙ of the extended-nip press roll 30. In the system shown in Fig. 5, the pressure medium supplied by the hydraulic pump 41 is passed from the pressure pipe 42 to the regulation valves 43₁...43ₙ and from these regulation valves along the pressure ducts 44₁...44ₙ to the loading shoes of each roll. Further, from each roll, in the normal way, a return pipe 45 is passed back into the tank 40. The hydraulic system differs from the hydraulic systems of ordinary extended-nip presses so that the loading shoes 15₁...15ₙ,35₁...35ₙ placed at both sides of the nip at corresponding locations are controlled by means of the same regulation valve 43₁...43ₙ. Thus, the pressure ducts 44₁...44ₙ coming from the regulation valves 43₁...43ₙ are branched to the two rolls 10,30. Thus, the system of regulation of the hydraulic system is simpler than in the prior-art solutions, and this has been achieved in particularly because the roll mantle 11 of the roll 10 is of low weight and can be profiled readily, as was already described above. In order that the regulation of the nip could be carried out successfully in the way described above, it is additionally essential that the areas of the loading shoes 15₁...15ₙ and 35₁...35ₙ placed at opposite sides of the nip are equally large, in which case, when the same pressure is passed to these loading shoes at both sides of the nip, the nip is loaded with equal forces from both sides of the nip.

Above, the invention has been described by way of example with reference to the figures in the accompanying drawing. The invention is, however, not confined to the exemplifying embodiments shown in the figures in the drawing alone, but the invention can be varied and modified within the scope of the inventive idea defined in the accompanying patent claims.

## Claims

1. An extended-nip press comprising an extended-nip press roll (30) and a back-up roll (10) forming an extended nip (N) with said extended-nip press roll (30), wherein the back-up roll (10) is a variable-crown roll loaded by means of shoes, comprising a stationary roll axle (12), around which a tubular roll mantle (11) is fitted revolving, which roll mantle is mounted by its ends on the roll axle (12) by means of end bearings (13a, 13b) and loaded towards the nip (N) by means of hydraulic loading shoes (15₁...15ₙ) fitted between the roll mantle (11) and the roll axle (12), which shoes act upon the inner face of the roll mantle (11) and are supported on the roll axle (12), and which shoes are loaded by means of a hydraulic pressure medium, whereby the nip pressure can be profiled in the axial direction of the roll (10) by regulating the pressure of the pressure medium passed into said loading shoes, **characterized in that** the roll mantle (11) is made of a fibre-reinforced composite material in which the reinforcement fibres are oriented at an angle of ± 5...25° in relation to the direction of the circumference of the roll mantle (11) so that the stability of shape of the roll mantle (11) in the direction of the circumference is good and the rigidity in the axial direction is low.

2. A press as claimed in claim 1, **characterized in that** the reinforcement fibre of the fibre-reinforced composite material of the roll mantle (11) consists of continuous fibre.

3. A press as claimed in claim 1 or 2, **characterized in that** the composite material of the roll mantle (11) consists of a combination in which the reinforcement fibre is carbon fibre and the matrix material is epoxy.

4. A press as claimed in claim 1 or 2, **characterized in that** the matrix material in the composite material of the roll mantle (11) is a low-weight metal material, such as aluminium or equivalent.

5. A press as claimed in any of the preceding claims, **characterized in that** the outer face (11') of the roll mantle is provided with a coating.

6. A press as claimed in claim 5, **characterized in that** the coating is an elastic coating, such as an elastomer coating, rubber coating, or equivalent.

7. A press as claimed in claim 5, **characterized in that** the coating consists of a material whose properties of adhesion to a paper web (W) and properties of separation from the paper web, respectively, are good, in particular of a ceramic material.

8. A press as claimed in any of the preceding claims, **characterized in that** the roll (10) is provided with a drive gear (20).

9. A press as claimed in any of the preceding claims, **characterized in that** the extended-nip press roll (30) is provided with hydraulic loading members (35₁...35ₙ) and that the hydraulic loading shoes (15₁...15ₙ) of the back-up roll (10) are controlled by means of the same regulation valves (43₁...43ₙ) that control the hydraulic loading members (35₁...35ₙ) placed at a corresponding location in the extended-nip press roll (30) at the opposite side of the nip (N), so that the same pressure is fed to opposite sides of the nip (N) to be effective at the same axial location.

## Patentansprüche

1. Langspaltpresse mit
einer Langspaltpressenwalze (30) und einer Gegenwalze (10), die einen Langspalt (N) mit der Langspaltpressenwalze (30) ausbildet,
wobei die Gegenwalze (10) eine Walze mit variabler Bombierung ist, die mittels Schuhen belastet wird und eine ortsfeste Walzenachse (12) aufweist, um die ein röhrenartiger Walzenmantel (11) umlaufend eingesetzt ist, wobei der Walzenmantel durch seine Enden an der Walzenachse (12) mittels Endlager (13a, 13b) montiert ist und zu dem Spalt (N) hin mittels Hydraulikbelastungsschuhen (15₁ bis 15ₙ) belastet wird, die zwischen dem Walzenmantel (11) und der Walzenachse (12) eingesetzt sind, wobei die Schuhe an der Innenseite des Walzenmantels (11) wirken und an der Walzenachse (12) gestützt sind, und wobei die Schuhe mittels eines Hydraulikdruckmediums belastet werden, wodurch der Spaltdruck in der axialen Richtung der Walze (10) profiliert werden kann, indem der Druck des in die Belastungsschuhe tretenden Druckmediums reguliert werden kann,
**dadurch gekennzeichnet, dass**
der Walzenmantel (11) aus einem faserverstärkten Verbundmaterial hergestellt ist, in dem die Verstärkungsfasern bei einem Winkel von ± 5 bis 25° in Bezug auf die Richtung des Umfangs des Walzenmantels (11) ausgerichtet sind, so dass die Stabilität der Form des Walzenmantels (11) in der Richtung des Umfangs günstig ist und die Steifigkeit in der Achsenanrichtung gering ist.

2. Presse gemäß Anspruch 1,
**dadurch gekennzeichnet, dass**
der Verstärkungsfaser des faserverstärkten Verbundmaterials des Walzenmantels (11) aus einem kontinuierlichen Faser besteht.

3. Presse gemäß Anspruch 1 oder 2,
**dadurch gekennzeichnet, dass**
das Verbundmaterial des Walzenmantels (11) aus einer Kombination besteht, bei der der Verstärkungsfaser Kohlenstofffaser ist und das Matrixmaterial Epoxid ist.

4. Presse gemäß Anspruch 1 oder 2,
**dadurch gekennzeichnet, dass**
das Matrixmaterial bei dem Verbundmaterial des Walzenmantels (11) ein Material mit einem geringen Gewicht wie beispielsweise Aluminium oder dergleichen ist.

5. Presse gemäß einem der vorherigen Ansprüche,
**dadurch gekennzeichnet, dass**
die Außenfläche (11') des Walzenmantels mit einer Beschichtung versehen ist.

6. Presse gemäß Anspruch 5,
**dadurch gekennzeichnet, dass**
die Beschichtung eine elastische Beschichtung wie beispielsweise eine Elastomerbeschichtung, eine Gummibeschichtung oder dergleichen ist.

7. Presse gemäß Anspruch 5,
**dadurch gekennzeichnet, dass**
die Beschichtung aus einem Material besteht, dessen Hafteigenschaften an der Papierbahn (W) und dessen Ablöseeigenschaften von der Papierbahn jeweils günstig sind, wobei die Beschichtung insbesondere aus einem keramischen Material besteht.

8. Presse gemäß einem der vorherigen Ansprüche,
**dadurch gekennzeichnet, dass**
die Walze (10) mit einem Antriebsgetriebe (20) versehen ist.

9. Presse gemäß einem der vorherigen Ansprüche,
**dadurch gekennzeichnet, dass**
die Langspaltpressenwalze (30) mit Hydraulikbelastungselementen (35₁ bis 35ₙ) versehen ist und
die Hydraulikbelastungsschuhe (15₁ bis 15ₙ) der Gegenwalze (10) mittels der gleichen Regulierventile (43₁ bis 43ₙ) gesteuert werden, die die Hydraulikbelastungselemente (35₁ bis 35ₙ) steuern, die an einem entsprechenden Ort in der Langspaltpressenwalze (30) an der entgegengesetzten Seite des Spalts (N) angeordnet sind, so dass der gleiche Druck zu den gegenüberstehenden Seiten des Spalts (N) zugeführt wird, um an dem gleichen axialen Ort wirksam zu sein.

## Revendications

1. Presse à pince allongée comprenant un rouleau de presse à pince allongée (30) et un rouleau d'appui (10) formant une pince allongée (N) avec ledit rouleau de presse à pince allongée (30), dans laquelle le rouleau d'appui (10) est un rouleau à couronne variable chargé au moyen de sabots, comprenant un axe de rouleau fixe (12), autour duquel est montée en rotation une enveloppe de rouleau tubulaire (11), laquelle enveloppe de rouleau est montée par ses extrémités sur l'axe de rouleau (12) au moyen de paliers d'extrémité (13a,13b) et chargée vers la pince (N) au moyen de sabots de chargement hydrauliques (15₁....15ₙ) montés entre l'enveloppe de rouleau (11) et l'axe de rouleau (12), lesquels sabots agissent sur la face interne de l'enveloppe de rouleau (11) et sont supportés par l'axe de rouleau (12), et lesquels sabots sont chargés au moyen d'un agent de pression hydraulique, moyennant quoi la pression de pince peut être profilée dans la direction axiale du rouleau (10) en régulant l'agent de pression introduit dans lesdits sabots de chargement, **caractérisée en ce que** l'enveloppe de rouleau (11) est constituée d'un matériau composite renforcé par fibres dans lequel les fibres de renforcement sont orientées selon un angle de plus ou moins 5...25° par rapport à la direction de la circonférence de l'enveloppe de rouleau (11) de sorte que la stabilité de la forme de l'enveloppe de rouleau (11) dans la direction de la circonférence est bonne et que la rigidité dans la direction axiale est faible.

2. Presse selon la revendication 1, **caractérisée en ce que** la fibre de renforcement du matériau composite renforcé par fibres de l'enveloppe de rouleau (11) consiste en fibres continues.

3. Presse selon la revendication 1 ou 2, **caractérisée en ce que** le matériau composite de l'enveloppe de rouleau (11) consiste en une combinaison dans laquelle la fibre de renforcement est une fibre de carbone et le matériau de matrice est de l'époxyde.

4. Presse selon la revendication 1 ou 2, **caractérisée en ce que** le matériau de matrice dans le matériau composite de l'enveloppe de rouleau (11) est un matériau de métal de faible poids tel que de l'aluminium ou équivalent.

5. Presse selon l'une quelconque des revendications précédentes, **caractérisée en ce que** la face extérieure (11') de l'enveloppe de rouleau est munie d'un revêtement.

6. Presse selon la revendication 5, **caractérisée en ce que** le revêtement est un revêtement élastique tel qu'un revêtement élastomère, un revêtement de caoutchouc, ou équivalent.

7. Presse selon la revendication 5, **caractérisée en ce que** le revêtement consiste en un matériau dont les propriétés d'adhérence sur une bande de papier continue (W) et les propriétés de séparation du papier, respectivement, sont bonnes, en particulier d'un matériau céramique.

8. Presse selon l'une quelconque des revendications précédentes, **caractérisée en ce que** le rouleau (10) est muni d'un engrenage de commande (20).

9. Presse selon l'une quelconque des revendications précédentes, **caractérisée en ce que** le rouleau de presse à pince allongée (30) est muni d'éléments de chargement hydrauliques (35₁...35ₙ) et **en ce que** les sabots de chargement hydrauliques (15₁...15ₙ) du rouleau d'appui (10) sont commandés au moyen des mêmes soupapes de régulation (43₁...43ₙ) qui commandent les éléments de chargement hydrauliques (35₁...35ₙ) disposés en un emplacement correspondant dans le rouleau de presse à pince allongée (30) sur le côté opposé de la pince (N) de sorte que la même pression est amenée sur les côtés opposés de la pince (N) pour agir sur le même emplacement axial.
